# EUROPÄISCHE PATENTANMELDUNG

(11) **EP 2 540 471 A2**
(43) Veröffentlichungstag der Anmeldung: **02.01.2013**
(21) Anmeldenummer: 12174248.0
(22) Anmeldetag: 28.06.2012
(51) Int. Cl.: B29C 44/56, B29C 45/14, B29C 45/04

(54) **Verfahren zur Herstellung von Formteilen und Formteil**

(30) Priorität: 28.06.2011 DE 102011051410; 14.02.2012 DE 102012101137
(71) Anmelder: Gealan Formteile GmbH, 95145 Oberkotzau (DE)
(72) Erfinder: Trausch Sebastian, 95444 Bayreuth (DE)
(74) Vertreter: Fleuchaus, Michael A.

(57) **Zusammenfassung**

Ein Verfahren zur Herstellung von Formteilen (A) aus mindestens einem ersten und einem zweiten Material (2), wobei das erste Material vorzugsweise als Partikelschaum ausgestaltet ist und mittels des zweiten Materials (2) mindestens eine erste Schicht (3) auf dem ersten Material gebildet wird ist gekennzeichnet durch die Herstellung eines Teilformteils (B) aus dem ersten Material, die Herstellung einer ersten Schicht (3) in einem Werkzeug (4), beispielsweise für eine Spritzgießmaschine, die Erzeugung eines Freiraumes (5) im Werkzeug (4) zur Aufnahme der ersten Schicht (1) und des Teilformteils (B), die Zuführung des Teilformteils (B) zur ersten Schicht (3) zur Bildung eines Halbfertigteils (C) und das Einbringen des Halbfertigteils in den Freiraum (5) des Werkzeugs (4), und das Überfluten des Halbfertigteiles (C) mit einer weiterer Schicht (6).

## Beschreibung

Die Erfindung betrifft ein Verfahren zur Herstellung von Formteilen aus mindestens einem ersten und einem zweiten Material, wobei das erste Material vorzugsweise als Partikelschaum ausgestaltet ist und mittels des zweiten Materials mindestens eine erste Schicht hergestellt wird, die auf dem ersten Material angeordnet wird. Die Erfindung betrifft ferner ein Formteil.

Formteile aus Kunststoff, insbesondere Formteile, die aus einem Partikelschaum bestehen, sind im Stand der Technik bekannt. Häufig wird ein Partikelschaumformteil verwendet, um das Gewicht zu reduzieren, beispielsweise bei Computergehäusen, da es eine geringe Dichte aufweist. Partikelschaumformteile weisen zudem gute Absorptionseigenschaften im Hinblick auf Schall, Wärme und mechanische Energie auf, besitzen eine geringe Feuchtigkeitsaufnahmekapazität und weisen ein hohes Rückstellvermögen nach Verformungen auf. Nachteilig an Formteilen die nur aus Partikelschäumen bestehen ist deren geringe Widerstandskraft sowie deren geringe mechanische Festigkeit und Steifigkeit. Zusätzlich weisen Formteile aus Partikelschaum eine ungenügende Oberflächenqualität für anspruchsvolle Applikationen im Sichtbereich auf. In den meisten Anwendungsfällen wird die Oberfläche des Formteils aus Partikelschaum deshalb vollflächig oder partiell veredelt. Solche veredelten Formteile werden häufig in Automobilen verarbeitet.

Zur Veredelung der Oberflächen solcher Formteile werden aktuell im Wesentlichen zwei unterschiedliche Ansätze im Stand der Technik verfolgt. Gemäß des ersten Ansatzes wird das Formteil aus Partikelschaum nach seiner Herstellung veredelt, beispielsweise durch kaschieren, lackieren oder dergleichen. Beim zweiten Ansatz wird eine vorhandene Deckschicht, beispielsweise aus Stoff, ein Tiefziehteil, eine Folie, eine Slush-Haut oder dergleichen, in einem Formwerkzeug mit Partikelschaum hinterschäumt.

Der erstgenannte Ansatz ist aufwendig in der Produktion und aufgrund des Einsatzes von Klebstoffen, Lösungsmitteln, Primern, Lacken oder ähnlichen Materialien wenig umweltverträglich. Des Weiteren zeichnen sich bei dünnen Deckschichten, wie sie beispielsweise beim Lackieren entstehen, Oberflächenstruckturen und -fehler des Partikelschaumformteils ab.

Beim zweiten Verfahren kann die Deckschicht bei der Formteilbildung stark beansprucht werden, beispielsweise den bei der Bildung des Partikelschaumkörpers zum Einsatz kommenden Dampf. Gegebenenfalls kann zudem durch das Vorhandensein der Deckschicht im Formwerkzeug die Formbildung negativ beeinflusst oder sogar verhindert werden, beispielsweise durch Blasenbildung, Schäumungsfehler, Lunkerbildung und dergleichen.

Zur Verbesserung der Oberflächenerscheinung von Formteilen aus Partikelschaum werden außerdem strukturierte Werkzeugoberflächen eingesetzt. Dieses Verfahren produziert jedoch keine Oberflächenerscheinung, die ausreichend ist, dass solche Formteile im Sichtbereich von Pkw- und Lkw-Interieurverkleidungen eingesetzt werden können, zumindest dann nicht, wenn ein gewisser Qualitätsanspruch an die Interieurverkleidungen gestellt wird.

Der vorliegenden Erfindung liegt daher die Aufgabe zugrunde, ein Verfahren der eingangs genannten Art bereit zu stellen, das die Nachteile des Standes der Technik überwindet und insbesondere eine einfache, kostengünstige und prozessoptimierte Herstellung ermöglicht. Der vorliegenden Erfindung liegt weiterhin die Aufgabe zugrunde, ein Formteil bereit zu stellen, dass im Hinblick auf die Besonderheiten des erfindungsgemäßen Verfahrens verbessert ist.

Erfindungsgemäß werden die voranstehenden Aufgaben durch ein Verfahren mit den Merkmalen des Patentanspruchs 1 gelöst sowie in Formteil gemäß Anspruch 14. Ausführungsformen der Erfindung sind Gegenstand der abhängigen Ansprüche

Danach ist das in Rede stehende Verfahren zur Herstellung von Formteilen ausgestaltet und weitergebildet durch die Schritte:
- Herstellung eines Teilformteils aus einem ersten Material, insbesondere eines Teilformteils aus einem Partikelschaum,
- Herstellung einer ersten Schicht in einem Werkzeug, beispielsweise für eine Spritzgießmaschine,
- Erzeugung eines Freiraumes im Werkzeug zur Aufnahme der ersten Schicht und des Teilformteils,
- Zuführen des Teilformteils zur ersten Schicht zur Bildung eines Halbfertigteils und einbringen des Halbfertigteils in den Freiraum des Werkzeugs, und
- Überfluten des Halbfertigteiles mit einer weiteren Schicht.

In erfindungsgemäßer Weise ist erkannt worden, dass zur Sicherstellung einer optimalen Oberflächenstruktur die mechanischen Eigenschaften eines Formteils verbessert werden müssen, wobei auch zu berücksichtigen ist, dass ein Herstellungsprozess, insbesondere für die Herstellung von Formteilen in großen Stückzahlen, wirtschaftlich sinnvoll darstellbar sein muss.

Bei einem Verfahren gemäß Anspruch 1 wird in besonders einfacher und technisch gut umsetzbarer Weise die Herstellung eines Formteils durch ein Teilformteil und mindestens zwei Schichten, insbesondere Deckschichten erreicht, wobei dieses Teilformteil, also das Partikelschaumformteil innerhalb desselben Prozesses oder aber auch in einem weiteren, völlig separaten Prozess hergestellt werden kann.

Nachdem das Teilformteil bereit- und/oder hergestellt ist, erfolgt die Herstellung einer ersten Schicht in einem Werkzeug, beispielsweise einem Werkzeug für eine Spritzgießmaschine. Nach der Herstellung dieser ersten Schicht wird ein Freiraum zur Aufnahme der ersten Schicht und des Teilformteils erzeugt. Es erfolgt dann die Zuführung des Teilformteils zur ersten Schicht in den Freiraum des Werkzeugs, so dass ein Halbfertigteil gebildet wird, wobei die Zusammenführung zum Halbfertigteil innerhalb oder außerhalb des Freiraums erfolgen kann. Im letzten Arbeitsschritt wird das Halbfertigteil in diesem Werkzeug oder aber einem weiteren Werkzeug mit einer weiteren Schicht überflutet.

Hierdurch wird erreicht, dass das Teilformteil, welches ebenfalls nur dünnwandig ausgeführt sein kann, insbesondere durch die erste und die weitere Schicht zumindest teilweise um- bzw. eingeschlossen wird, wodurch das Teilformteil eine gute Oberflächenstruktur und eine verbesserte mechanische Stabilität erhalten kann.

Somit könnten Sonnenblenden, Kofferraumverkleidungen, Kopfstützen oder dergleichen ähnliche Teile vereinfacht und Prozessoptimiert hergestellt werden, wobei die Einbindung eines Spritzgießprozesses in das Herstellungsverfahren zumindest teilweise zur Optimierung des Herstellungsprozesses beiträgt, insbesondere wenn das Verfahren bei der Herstellung großer Stückzahlen des Formteils zur Anwendung kommt.

Zudem könnten durch das Anpassen der spezifischen Eigenschaften der Materialien, neue Anwendungen erschlossen werden. Beispiele hierfür sind Energieabsorbierende Verkleidungsteile im Sichtbereich von Pkw und Lkw, wie zum Beispiel Türverkleidungen, Mittelkonsolenverkleidungen, Verkleidungen im Kniebereich, A-, B- oder C-Säulenverkleidungen oder dergleichen, wobei hier von mechanischer Energie, beispielsweise im Falle eines Aufpralls des Fahrzeugs die Rede ist.

Anwendungen im Non-Automotive-Bereich könnten - gleichwohl auch für Ähnliche Anwendungsfälle - Sitzkissen für Sportstadien oder für Freizeit- und Sportgeräte wie Motorräder oder Schlitten oder dergleichen sein. Ebenfalls ist die Anwendung in der Möbelindustrie, zum Beispiel für Armlehnen oder dergleichen und in der Gebäudetechnik beispielsweise bei Warmwasseranwendungen denkbar.

Bei einer besonders bevorzugten Ausführungsform sind die angewendeten Schmelztemperaturen der verwendeten Materialien so aufeinander abgestimmt, dass die überflutende Komponente die Oberfläche des Teilformteils nicht oder in nur geringem Maß an- bzw. abschmilzt.

Es ist zudem möglich, dass bei einer weiteren Ausführungsform der Erfindung das Teilformteil aus einem ersten Material, die erste Schicht aus einem zweiten Material und die weitere Schicht aus einem dritten Material gebildet wird. Auf diese Weise können besonders die Anwendungsspezifischen Eigenschaften des Formteils bestimmt werden und diese insbesondere im Hinblick auf die jeweiligen Anordnungen des Formteils individuell angepasst werden. Darüber hinaus ist hierdurch eine weitere Optimierung des Herstellungsprozesses möglich.

Im Rahmen einer besonders guten Prozessökonomie könnte der Freiraum zur Aufnahme des Halbfertigteils im Werkzeug durch Drehen eines Werkzeugsegments um die vertikale Achse hin zu einem zweiten Werkzeugsegment erzeugt werden. Dies wäre beispielsweise durch ein Würfelwerkzeug möglich. Des Weiteren könnte der Freiraum zur Aufnahme des Halbfertigteils im Werkzeug durch Drehen eines Werkzeugsegments um eine horizontale Achse hin zu einem zweiten Werkzeugsegment erfolgen, was durch ein Drehplattenwerkzeug verwirklicht sein könnte.

Schließlich wäre es auch möglich, dass der Freiraum zur Aufnahme des Halbfertigteils im Werkzeug durch teilweises Auffahren einer oder beider Werkzeughälften erzeugt wird, wie dies beispielsweise in einem negativen Prägehubverfahren erfolgt. Weiterhin könnte der Freiraum zur Aufnahme des Teilwerkstücks und/oder der weiteren Schicht durch vollständiges und/oder partielles Zurückziehen beweglicher Werkzeugelemente erfolgen (Schieber), wie dies auch im Mehrkomponentenspritzguß bekannt ist.

Es könnten auch unterschiedliche Verfahren zur Erzeugung des Freiraumes eingesetzt werden. Hierbei wären Kombinationen von Würfelwerkzeug oder Drehplattenwerkzeug, negativer Prägung und Schieberwerkzeug in jedweder Kombination möglich.

Im Rahmen einer wiederum effizienteren Prozessökonomie könnte die weitere Schicht in einem zweiten Werkzeug für eine Spritzgießmaschine auf die erste Schicht und das Teilformteil aufgebracht werden. Hierbei wäre ein Verbringen des Teilformteils in das erste Werkzeug und dann das Versetzen des Halbfertigteils in ein zweites Werkzeug erforderlich, was aber ebenfalls mit Hilfe von drehbaren Werkzeugen und/oder mittels eines Umsetzens gelöst werden könnte.

Zur Erzielung einer guten Stabilität des Formteils könnte zumindest die erste und/oder die weitere Schicht jeweils als Deckschicht für das Teilformteil ausgeführt sein und vorzugsweise als Grund- bzw. Deckschicht des Teilformteils ausgebildet werden. Unter einer Grundschicht kann in diesem Zusammenhang auch eine Schicht zu verstehen sein, die Strukturelemente aufweist, die der Befestigung bzw. dem Halten des Teilformteils auf der Grundschicht dienen, so dass das so gebildete Halbfertigteil besonders sicher mit einer Deckschicht überströmt werden kann.

In einer bevorzugten Ausführungsform sind die erste Schicht, das Teilformteil und die zweite Schicht miteinander verbunden. Dies könnte derart erfolgen, dass zumindest in Teilbereichen ihrer Kontaktstellen ein Kraft- und/oder Formschluss hergestellt wird, wodurch sich gegebenenfalls ein weitergebildetes Fügeverfahren für derartige Partikelschaumteile ergeben würde. Hierbei könnte ein umlaufender Bund oder eine umlaufende Nut, eine Domauskernung, eine Stangenverbindung, eine Folienverbindung mittels Haftfolie oder dergleichen zum Einsatz kommen. Zwar würde ein so ausgebildetes Teil somit bevorzugt eine Kombination aus einem Kraft- und/oder Formschluss zwischen der ersten Schicht, dem Teilformteil und/oder der zweiten Schicht aufweisen, allerdings könnte hierzu auch optional durch eine stoffschlüssige Verbindung hinzugefügt werden, die beispielsweise der Sicherung der kraft- und/oder formschlüssigen Verbindung dienen könnte. Diese stoffschlüssige Verbindung müsste könnte dabei sowohl in den Bereichen der kraft- bzw. formschlüssigen Verbindung angeordnet werden oder aber auch in hiervon abweichenden Bereichen des Formteils.

Zur Erzielung einer besonderen Festigkeit des Formteils wird bei einer Ausführungsform der Erfindung die Oberfläche des Teilformteils derart modifiziert, dass die Haftung zu der angrenzenden ersten und/oder weiteren Schicht ― oder umgekehrt ― durch eine vollständige und/oder partielle spezifische Oberflächenstruktur verbessert oder sicher gestellt wird. Insoweit können oberflächenvergrößernde Strukturen ebenso zum Einsatz kommen ― hierdurch werden möglicherweise zwischen den Materialien bestehende Adhäsions- oder Kohäsionskräfte vergrößert ― wie mechanische Verbindungsstrukturen.

Bei einer bevorzugten Ausführungsform der Erfindung wird zur weiteren Vereinfachung der Verarbeitung des Formteils das Teilformteil durch Kraftschluss und/oder Formschluss an oder auf der ersten Schicht fixiert. Bei dieser Ausführungsform ist wiederum die Möglichkeit gegeben, die kraft- und/oder formschlüssige Verbindung durch eine möglicherweise flächige oder punktuell vorliegende stoffschlüssige Verbindung zu ergänzen.

Unter kraftschlüssigen Verbindungen und/oder mechanischen Verbindungsstrukturen sind dabei im Kontext der vorliegenden Erfindung Steckverbindungen (EPP-Dom; TPE-Dom), Rippenverbindungen (EPP; TP) und/oder Widerhaken oder dergleichen zu verstehen. Unter formschlüssigen Verbindungen sind rückseitige Deckschichten, Hüllenschichten, Schwalbenschwanz Rotationsprofile (EPP; TP), Rasthaken (EPP; TP) und/oder Wellenprofile oder dergleichen zu verstehen.

Zur Verbesserung der Verbundfestigkeit des Teilformteils könnte dieses oder aber auch die erst und/oder zweite Schicht bei einer Ausführungsform der Erfindung mindestens partiell Oberflächenmodifiziert werden, beispielsweise durch Plasma, Corona, Fluorierung, Haftvermittlerfolie oder dergleichen.

Hinsichtlich einer besonderen flexiblen Ausgestaltung des Formteils könnte die erste und/oder die weitere Schicht aus einem thermoplastischen Kunststoff, beispielsweise PP oder PBT, aus einem thermoplastischen Elastomer, beispielsweise TPE, TPS oder TPU, aus einem Elastomer, beispielsweise NBR, HNBR oder IR, aus einem Duroplasten, beispielsweise MF oder EP, aus Silikon mittels eines Reaction Injection Moulding Verfahrens (RIM) und/oder aus Polyurethan mittels eines Reaction Injection Moulding Verfahrens hergestellt werden. Hierdurch ließen sich wiederum die unterschiedlichsten Eigenschaften des Formteils realisieren.

Zur Erzielung einer geringen Fertigungstiefe könnte ein Herstellungsprozess realisiert werden indem die erste und die weitere Schicht auf einer Produktionsmaschine, vorzugsweise auf einer Spritzgussmaschine, hergestellt werden und das Teilformteil dem Herstellungsprozess von außen zugeführt wird. Hierdurch lassen sich die unterschiedlichen Verfahrensschritte des Herstellungsprozesses besonders gut entkoppeln. Zudem könnte die erste Schicht, das Teilformteil und die weitere Schicht auf kombinierten Spritzgussmaschinen und EPP-Maschinen hergestellt werden.

Bevorzugt ist erfindungsgemäße Formteil so aus- und weitergebildet, dass die erste Schicht und/oder das Teilformteil mindestens eine geometrische Umlenkgeometrie zum Unterwanderungsschutz gegenüber der weiteren Schicht aufweist. Hierdurch wäre die Stabilität des Formteils wiederum verbessert.

Bei einer bevorzugten Ausführungsform des erfindungsgemäßen Formteils könnte das vorzugsweise aus Partikelschaum bestehende Teilformteil im Wesentlichen vollständig durch die erste Schicht und/oder die weitere Schicht umhüllt sein. Je nach Anforderung oder Anwendung könnte die Umhüllung jedoch auch nur partiell erfolgen. Zusätzlich oder alternativ hierzu könnte das vorzugsweise aus Partikelschaum bestehende Teilformteil eine gleich große, eine kleinere oder eine größere projizierte Fläche als die erste Schicht und/oder die weitere Schicht aufweisen.

Bevorzugt weist die erste Schicht und/oder die zweite Schicht Oberflächenstrukturen auf, welche als mechanische Verbindungsstrukturen dienen und eine kraft- und/oder formschlüssige Verbindung zwischen der ersten Schicht, dem Teilformteil und/oder der weiteren Schicht herstellen.

Beispiele hierfür sind ein umlaufender Bund oder eine umlaufende Nut, eine Domauskernung, eine Stangenverbindung, eine Folienverbindung oder dergleichen. Insbesondere besteht bei dieser Ausführungsform auch die Möglichkeit, beispielsweise im Bereich eines umlaufenden Bundes oder einer umlaufenden Nut eine besonders stabile Verbindung insbesondere zwischen dem Material der ersten Schicht und der weiteren Schicht herzustellen, da in diesem Bereich eine besonders große Oberfläche der aufeinander treffenden Materialien besteht.

Zur Veredelung der Oberflächenstruktur des Formteils könnte das Teilformteil vollständig und/oder partiell eine vorgegebene Oberflächenstruktur aufweisen, beispielsweise durch den Einsatz von Sinter-Metalleinsätzen im zusätzlichen Werkzeug der EPP-Maschine, so das Oberflächenporen vermieden oder vermindert werden. Gleichermaßen könnte durch diese Maßnahme eine Oberflächenstruktur des Teilformteils erzeugt werden, die eine erhöhte Oberfläche aufweist, wodurch die Haftung zwischen dem Material der ersten und/oder weiteren Schicht sowie dem Teilformteil erhöht werden kann.

Es gibt nun verschiedene Möglichkeiten, die Lehre der vorliegenden Erfindung in vorteilhafter Weise auszugestalten und weiterzubilden. Dazu wird auf die nachfolgende Erläuterung bevorzugter Ausführungsbeispiele des erfindungsgemäßen Verfahrens zur Herstellung eines Formteils und des erfindungsgemäßen Formteils anhand der Zeichnung verwiesen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt die
- Fig. 1: in einer schematischen Ansicht, ein erstes Ausführungsbeispiel eines erfindungsgemäßen Verfahrens,
- Fig. 2: in einer schematischen Ansicht, ein zweites Ausführungsbeispiel eines erfindungsgemäßen Verfahrens, ausgeführt mit einem Würfelwerkzeug
- Fig. 3: in einer schematischen Ansicht, ein drittes Ausführungsbeispiel eines erfindungsgemäßen Verfahrens, ausgeführt mit einem Drehplattenwerkzeug,
- Fig. 4A-E: in schematischen Querschnitten, Ausführungsbeispiele erfindungsgemäßer Formteile,
- Fig. 5A-E: in schematischen Querschnitten, weitere Ausführungsbeispiele erfindungsgemäßer Formteile, bei welchen unterschiedliche Befestigungskonzepte zwischen dem Teilformteil und der ersten Schicht beispielhaft gezeigt sind,
- Fig. 6: in einer schematischen Ansicht, eine Ausführungsform eines erfindungsgemäßen Formteils mit einem Unterwanderungsschutz an der ersten Schicht.

Im Rahmen der nachfolgenden detaillierten Beschreibung erfindungsgemäßer Ausführungsformen beziehen sich gleiche Bezugszeichen, soweit keine anderen angaben gemacht werden, auf strukturell und/oder funktionell ähnliche Elemente.

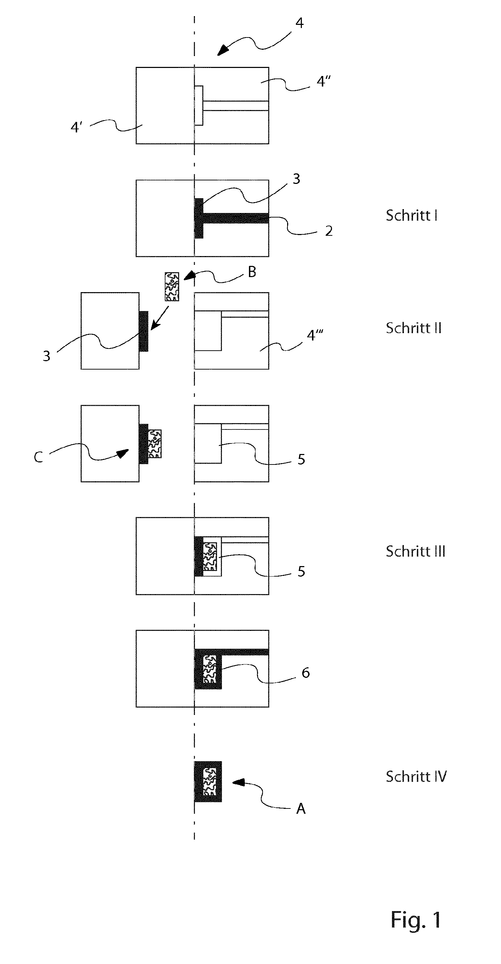

In Fig. 1 ist ein Verfahren zur Herstellung von Formteilen A gezeigt, wobei das Formteil A ein erstes und ein zweites Material 2 umfasst, wobei das erste Material als Partikelschaum ausgestaltet ist und ein Teilformteil B bildet. die einzelnen Schritte des erfindungsgemäßen Verfahrens werden in Fig. 1 in einer von oben nach unten sich erstreckenden Folge schematisch gezeigt.

Mittels des zweiten Materials 2 wird innerhalb einer Spritzgussmaschine in einem ersten Schritt 1 eine erste Schicht 3 hergestellt, auf der in Schritt II nach dem Öffnen des Spritzgusswerkzeugs 4, d.h. nach dem Auseinanderfahren der beiden Werkzeughälften 4', 4" das aus dem ersten Material bestehende Teilformteil B angeordnet und so das Halbfertigteil C gebildet wird. Die Werkzeughälfte 4" wird sodann durch eine andere Werkzeughälfte 4"' ersetzt, in welcher ein Freiraum 5 vorhanden ist, der ausreichend groß ist, so dass das Halbfertigteil C darin aufgenommen werden kann und darüber hinaus eine weitere Kavität zur Bildung der weiteren Schicht 6, wenn das Halbfertigteil C in den Freiraum eingefahren wurde bestehen bleibt (vgl. Schritt III).

Nach dem nachfolgenden Überfluten des Halbfertigteils C im Werkzeug durch Befüllung der bestehenden Kavität innerhalb der Werkzeughälfte 4"' mit einem weiteren Material, wodurch die weitere Schicht 6 gebildet wird, wird das Formteil A ausgeworfen.

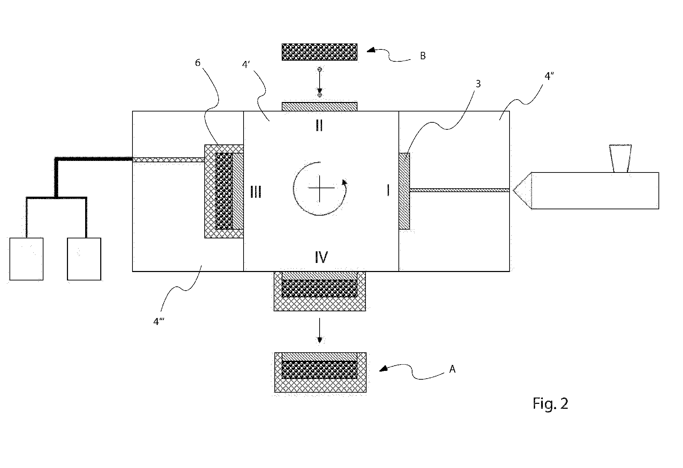

Das mit Bezug auf Fig. 1 beschriebene Verfahren kann beispielsweise durch eine Spritzgussmaschine unter Verwendung eines Würfelwerkzeugs effizient ausgeführt werden. Hierzu wird auf Fig. 2 verweisen, die ebenfalls das erfindungsgemäße Verfahren zeigt, wobei die wesentlichen Schritte I, II, III, IV des in Fig. 1 gezeigten Ablaufs hier ebenfalls gezeigt sind. Zur Abarbeitung der Verfahrensschritte wird der Würfel des Werkzeugs, der gleichzeitig die erste Werkzeughälfte darstellt, entgegen dem Uhrzeigersinn, wie angedeutet, gedreht. Dies erfolgt jeweils bei geöffnetem Werkzeug.

Die Abarbeitung der Einzelschritte des erfindungsgemäßen Verfahrens entspricht sodann dem Ablauf gemäß Fig. 1, auf die hier zur Vermeidung von Wiederholungen verwiesen wird.

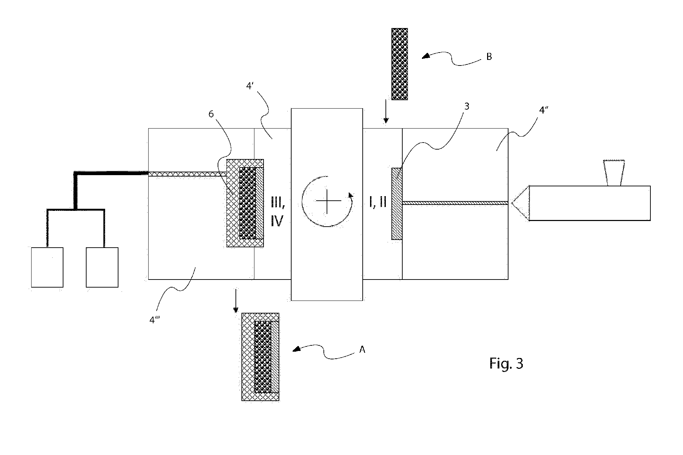

Entsprechendes gilt für Fig. 3, die die Ausführung des erfindungsgemäßen Verfahrens mit Hilfe eines Drehplattenwerkzeugs zeigt. Auch hier werden die wesentlichen Schritte I, II, III, IV des in Fig. 1 gezeigten Ablaufs gezeigt, wobei, da das gezeigte Drehplattenwerkzeug lediglich 2 Arbeitspositionen aufweist, zwischen denen bei geöffnetem Werkzeug gewechselt werden kann, jeweils zwei Arbeitsschritte in einer Position abgearbeitet werden (I, II und III, IV).

Darüber hinaus entsprechen auch in diesem Fall die Einzelschritte des erfindungsgemäßen Verfahrens dem Ablauf gemäß Fig. 1, auf die auch an dieser Stelle zur Vermeidung von Wiederholungen verwiesen wird.

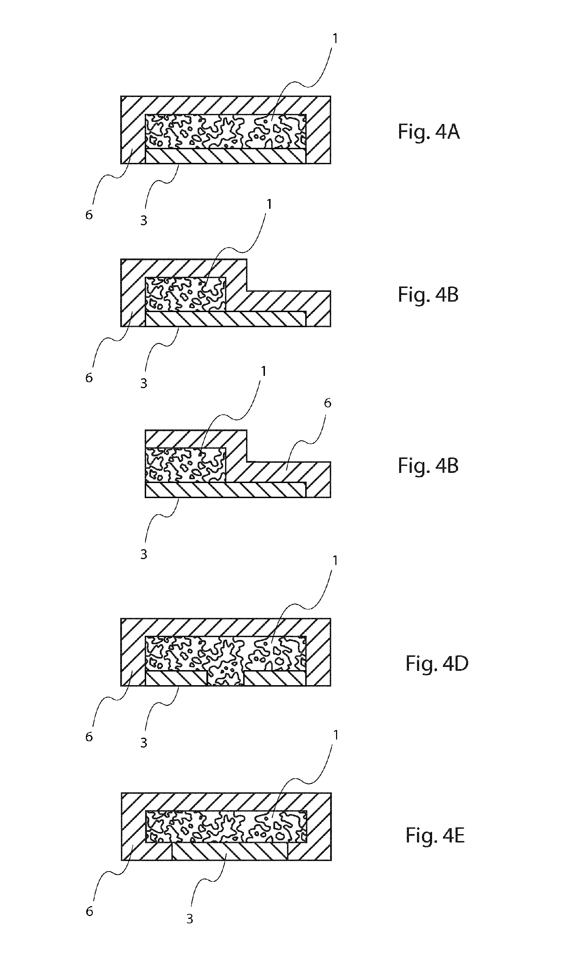

Die Fig. 4A bis E zeigen erfindungsgemäße Formteile, die mittels eines Verfahrens, wie es in den Figuren 1 bis 3 gezeigt ist, hergestellt wurden. In Fig. 4A wird eine Verbindung zwischen der ersten Schicht 3 und der weiteren Schicht 6 mittels Kraft- und/oder Stoffschluss erzeugt. Die erste Schicht 3 und die weitere Schicht 6 umschließen hierbei das Teilformteil 1 vollständig.

Ein ähnliches Formteil ist in Fig. 4B gezeigt, wobei hier die Bereiche, an denen die erste Schicht und die weitere Schicht aneinander anliegen vergrößert ist und hierdurch beispielsweise, bei geeigneter Materialwahl, eine verbesserte Adhäsion der beiden Schichten aneinander erzielt werden könnte.

In Fig. 4C wird der Zusammenschluss zwischen der ersten Schicht 3 und der weiteren Schicht 6 über eine solche Adhäsion der ersten Schicht 3 mit der weiteren Schicht 6 erzeugt, wobei die erste Schicht 3 und die weitere Schicht 6 das Teilformteil 1 lediglich teilweise umschließen. Ein ähnliches Formteil ist ebenso in Fig. 4D gezeigt, wobei hier wiederum eine kraft- und/oder stoffschlüssige Verbindung der ersten Schicht 3 mit der weiteren Schicht 6 zum zur Anwendung kommen kann.

Fig. 4E zeigt wiederum ein vollständig umschlossenes Formteil, bei dem das Teilformteil 1 durch die weitere Schicht 6 umspritzt bzw. umflutet ist und zwischen erster Schicht 3 und weiterer Schicht beispielsweise eine stoffschlüssige Verbindung an der Stoßstelle der die Schichten 3, 6 bildenden Materialien besteht.

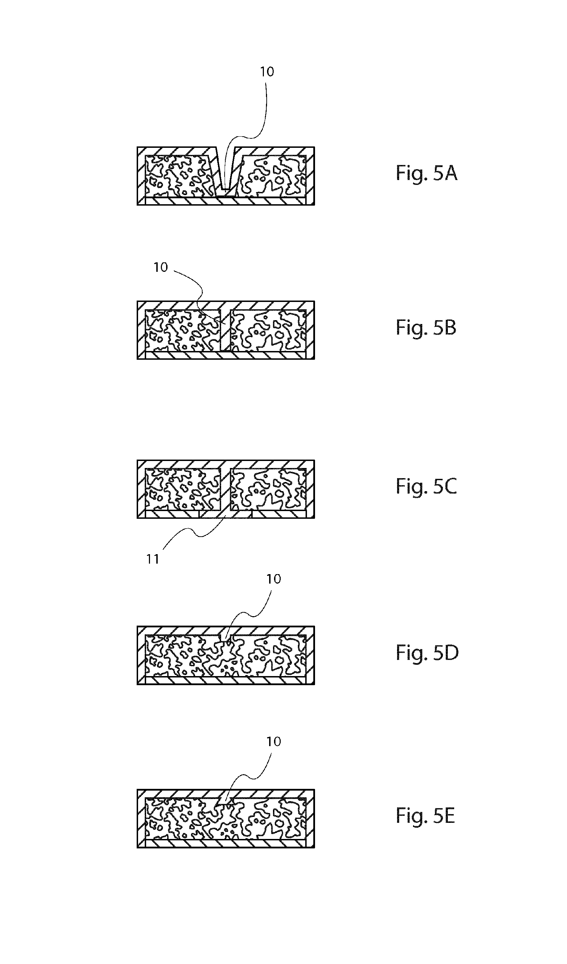

Fig. 5A bis E zeigen erfindungsgemäße Formteile, die mittels eines Verfahrens, wie es in den Figuren 1 bis 3 gezeigt ist, hergestellt wurden. Sämtlichen in den Figuren 5A bis E gezeigten erfindungsgemäßen Formteile weisen dabei mechanische Verbindungsstrukturen 10 zwischen der ersten Schicht, der weiteren Schicht und/oder dem Teilformteil auf, wobei es dabei keine Rolle spielt, ob entsprechende mechanische Verbindungsstrukturen an der ersten Schicht vorgesehen sind oder aber an der weiteren Schicht. Beide Varianten sind gleichermaßen vorteilhaft für die Ausführung der Erfindung.

In der Fig. 5A liegt eine Domauskernung vor, wobei hierbei die erste Schicht und die weitere Schicht im Bereich ihrer Kontaktfläche innerhalb der Domauskernung stoffschlüssig verbunden sind. Das Teilformteil 1 ist somit im wesentlichen formschlüssig fest zwischen der ersten und der weiteren Schicht aufgenommen und in jeder Richtung fixiert. Fig. 5B zeigt eine ähnliche Ausführungsform, bei der anstatt der Domauskernung lediglich eine Stangenverbindung vorgesehen ist, wobei die Materialien der ersten Schicht und der weiteren Schicht ebenfalls im Bereich ihrer Kontaktfläche stoffschlüssig miteinander verbunden sind. Auch hierdurch wird das Teilformteil 1 durch die erste und die weitere Schicht formschlüssig umschlossen und somit fixiert.

Fig. 5C erweitert dieses Konzept sogar bis zu einem Punkt an dem Aussparungen 11, die in der ersten Schicht von Beginn an vorgesehen waren beim überfluten des Teilformteils 1 durch eine Durchführung im Teilformteil 1 hindurch mit Material der weiteren Schicht befüllt werden. Das Teilformteil ist auf diese Weise allseitig von Material der weiteren Schicht umgeben und somit ebenfalls in jeder Richtung fest und form-, kraft- und/oder stoffschlüssig im Formteil fixiert.

Fig. 5D zeigt eine Ausführungsform, bei welcher ein Zapfen, der gleichermaßen in Form einer länglichen Rippe ausgeführt sein kann lediglich teilweise in das Teilformteil 1 hinein ragt. Hierdurch wird einerseits die Haftung zwischen dem Teilformteil und der weiteren Schicht erhöht, und zwar aufgrund der vergrößerten Oberfläche, an welcher ein Kontakt zwischen der weiteren Schicht und dem Teilformteil 1 besteht, andererseits können an dem Zapfen bzw. der Rippe auch Fixierungselemente, wie beispielsweise Raststufen, Wiederhaken, Gewindegänge und der gleichen angebracht sein. Auf diese Weise wird ein sicherer kraft- und/oder formschlüssiger Zusammenhalt des Teilformteils mit der weiteren Schicht gewährleistet, der gegebenenfalls auch durch Kohäsionskräfte unterstützt wird.

Fig. 5E zeigt eine Variante der eben beschriebenen Ausführungsform, bei welcher der Zapfen eine schwalbenschwanzförmige Form aufweist und insoweit ein sicherer Halt der weiteren Schicht am Teilformteil gewährleistet ist.

An dieser Stelle sei angemerkt, dass solche mechanischen Verbindungsstrukturen, soweit sie an der ersten Schicht angebracht sind, beispielsweise in form eines Zapfens mit Außengewinde oder aber in Form eines schwalbenschwanzförmigen Steges, auch zur Fixierung des Teilformteils 1 an der ersten Schicht unmittelbar nach deren Herstellung verwendet werden können, in dem beispielsweise das Teilformteil 1 auf den Gewindezapfen aufgeschraubt wird oder aber der schwalbenschwanzförmige Steg seitlich in eine entsprechende Nut am Teilformteil 1 eingeschoben wird.

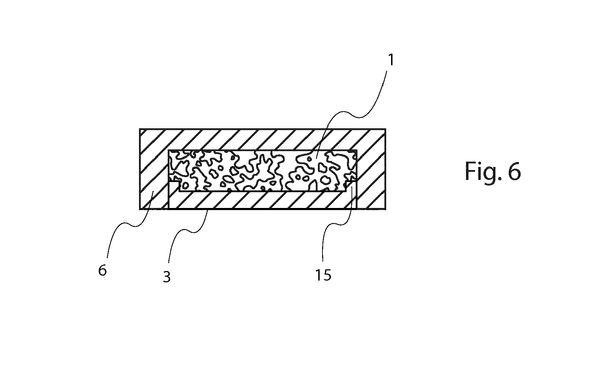

Fig. 6 zeigt einen an der ersten Schicht 3 angebrachten Unterwanderungsschutz 15, der sicher stellt, dass beim überfluten des Halbfertigteils mit dem Material der zweiten Schicht 6 das Teilformteil 1 nicht durch dieses Material unterwandert wird und hierdurch das Teilformteil angehoben wird, was unerwünscht wäre. Durch den stegförmigen Unterwanderungsschutz wird sicher gestellt, dass kein oder nur sehr wenig Material in den zwischen der ersten Schicht und dem Teilformteil existierenden Spalt eindringen kann. Auf diese Weise kann eine feste Fixierung des Teilformteils an der ersten Schicht bei oder währen dessen Aufbringen hierauf zumindest teilweise vermieden werden.

Hinsichtlich weiterer Details wird zur Vermeidung von Wiederholung auf die allgemeine Beschreibung verwiesen. Schließlich sei darauf hingewiesen, dass die in den voran stehenden Ausführungsbeispielen, in der allgemeinen Beschreibung und den Patentansprüchen beschriebenen Merkmale in jedweder Weise kombiniert werden können.

## Patentansprüche

1. Verfahren zur Herstellung von Formteilen (A) aus mindestens einem ersten Material und einem zweiten Material (2), wobei das erste Material vorzugsweise als Partikelschaum ausgestaltet ist und mittels des zweiten Materials (2) mindestens eine erste Schicht (3) hergestellt wird, **gekennzeichnet durch**
a) Herstellung eines Teilformteils (B) aus dem ersten Material,
b) Herstellung einer ersten Schicht (3) in einem Werkzeug (4), beispielsweise für eine Spritzgießmaschine,
c) Erzeugung eines Freiraumes (5) im Werkzeug (4) zur Aufnahme der ersten Schicht (3) und des Teilformteils (B),
d) Zuführung des Teilformteils (B) zur ersten Schicht (3) zur Bildung eines Halbfertigteils (C) und Einbringen des Halbfertigteils in den Freiraum (5) des Werkzeugs (4), und
e) Überfluten des Halbfertigteiles (C) mit einer weiteren Schicht (6).

2. Verfahren nach Anspruch 1, **dadurch gekennzeichnet, dass** der Freiraum (5) im Werkzeug (4) zur Aufnahme des Teilformteils (B) und der weiteren Schicht (6) durch ein Auswechseln einer Werkzeughälfte (4") gegen eine andere Werkzeughälfte (4"') erfolgt und/oder bei Weiterverwendung gleicher Werkzeughälften des Werkzeugs (4) durch ein teilweises Auffahren der beiden Werkzeughälften (4', 4") gegeneinander und/oder durch ein vollständiges und/oder partielles Zurückziehen beweglicher Werkzeugelemente innerhalb des Werkzeugs (4) erzeugt wird.

3. Verfahren nach Anspruch 2, **dadurch gekennzeichnet, dass** das Auswechseln einer Werkzeughälfte (4") gegen eine andere Werkzeughälfte (4"') durch ein Drehen der einen Werkzeughälfte (4") um eine vertikale oder horizontale Achse relativ zur zweiten Werkzeughälfte (4') erfolgt.

4. Verfahren nach einem der Ansprüche 1 bis 3, **dadurch gekennzeichnet, dass** die erste Schicht (3), das Teilformteil (B) und/oder die weitere Schicht (6) miteinander verbunden werden, beispielsweise kraftschlüssig und/oder formschlüssig miteinander verbunden werden, und dass optional zusätzlich eine stoffschlüssige Verbindung insbesondere zwischen der ersten (3) und der weiteren Schicht (6) gebildet wird.

5. Verfahren nach einem der Ansprüche 1 bis 4, **dadurch gekennzeichnet, dass** die Oberflächen des Teilformteils (B) modifiziert wird, um die Haftung zur angrenzenden ersten (3) und/oder weiteren Schicht (6) zu verbessern, beispielsweise durch Plasma, Corona, Fluorierung und/oder Haftvermittlerfolie.

6. Verfahren nach einem der Ansprüche 1 bis 5, **dadurch gekennzeichnet, dass** das Teilformteil (B) durch Kraftschluss, Stoffschluss und/oder Formschluss beim Zuführen zur ersten Schicht (3) auf dieser fixiert wird.

7. Verfahren nach einem der Ansprüche 1 bis 6, **dadurch gekennzeichnet, dass** der ersten Schicht (3) gleichzeitig ein, zwei oder mehrere Teilformteile (B) zugeführt werden.

8. Verfahren nach einem der Ansprüche 1 bis 7, **dadurch gekennzeichnet, dass** die erste Schicht (3) und/oder die weitere Schicht (6) aus einem thermoplastischen Kunststoff, beispielsweise PP oder PBT, aus einem thermoplastischen Elastomer, beispielsweise TPE, TPS oder TPU, aus einem Elastomer, beispielsweise NBR, HNBR oder IR, aus einem Duroplasten , beispielsweise MF oder EP, aus Silicon mittels eines Reaction Injection Moulding Verfahrens (RIM) und/oder aus Polyurethan mittels eines Reaction Injection Moulding Verfahrens (RIM) hergestellt wird.

9. Verfahren nach einem der Ansprüche 1 bis 8, **dadurch gekennzeichnet, dass** die erste Schicht (3), das Teilformteil (B) und die weitere Schicht (6) auf kombinierten Spritzguss- und EPP-Maschinen hergestellt werden.

10. Formteil hergestellt nach einem Verfahren nach einem der Ansprüche 1 bis 9, **dadurch gekennzeichnet, dass** die erste Schicht (3) und/oder das Teilformteil (B) mindestens eine geometrische Umlenkgeometrie als Unterwanderungsschutz aufweist.

11. Formteil nach Anspruch 10, **dadurch gekennzeichnet, dass** das Teilformteil (B) vollständig oder partiell eine vorgegebene Oberflächenstruktur aufweist, insbesondere durch den Einsatz von Sinter-Metalleinsätzen im zusätzlichen Werkzeug der EPP-Maschine, zur Vermeidung oder Verminderung von Oberflächenporen.

12. Formteil nach Anspruch 10 oder 11, **dadurch gekennzeichnet, dass** das vorzugsweise aus Partikelschaum bestehende Teilformteil (B) im Wesentlichen vollständig durch die erste Schicht (3) und die weitere Schicht (6) umhüllt ist.

13. Formteil nach einem der Ansprüche 10 bis 12, **dadurch gekennzeichnet, dass** das vorzugsweise aus Partikelschaum bestehende Teilformteil (B) eine gleiche, kleinere oder eine größerer projizierte Fläche wie die erste Schicht (3) und die weitere Schicht (6) aufweist.

14. Formteil nach einem der Ansprüche 10 bis 13, **dadurch gekennzeichnet, dass** das die erste (3) und/oder die weitere Schicht (6) mechanischen Verbindungsstrukturen, beispielsweise Zapfen, Stege, Rasthaken, Wiederhaken, durchdringende Stangen, Domauskerbungen, Nuten, elastische Zungen und dergleichen aufweist, mit welchen eine kraft- und/oder formschlüssige Verbindung zwischen dem Teilformteil (B) und der ersten (3) bzw. der weiteren Schicht (6) hergestellt wird.
